# EUROPEAN PATENT SPECIFICATION

(11) **EP 2 835 961 B1**
(45) Date of publication and mention of the grant of the patent: **11.01.2017**
(21) Application number: 13767872.8
(22) Date of filing: 26.02.2013
(51) Int. Cl.: H04N 5/225, G03B 13/06, H04N 5/232

(54) **IMAGE DISPLAY DEVICE**
BILDANZEIGEVORRICHTUNG
DISPOSITIF D'AFFICHAGE D'IMAGES

(30) Priority: 28.03.2012 JP 2012073118
(43) Date of publication of application: 11.02.2015
(73) Proprietor: FUJIFILM Corporation, Tokyo 106-8620 (JP)
(72) Inventor: AOKI Takashi, Saitama-shi Saitama 331-9624 (JP)
(74) Representative: Hoffmann Eitle
(86) International application number: PCT/JP2013/054981
(87) International publication number: WO 2013/146020

(56) References cited:
- WO-A1-2012/035822
- WO-A1-2012/035877
- JP-A- 2001 069 377
- JP-A- 2003 078 785

## Description

### BACKGROUND OF THE INVENTION

### 1. Field of the Invention

The present invention relates to an image display apparatus, and in particular, to an image display apparatus which includes an optical viewfinder and an electronic viewfinder and which is capable of superimposing the both view finder.

### 2. Description of the Related Art

In the technical field of a digital camera (imaging apparatus), in general, although an electronic image of a subject acquired by a photographing optical system of a photographing lens, an imaging element, and the like is displayed on a liquid crystal monitor provided on the rear surface of a camera body to confirm a composition or a focusing state, in recent years, a model in which a finder for composition or focusing state confirmation is provided separately from the liquid crystal monitor on the rear surface has become widely used. As the finder system, an optical viewfinder (OVF: hereinafter, referred to as OVF) and an electronic viewfinder (EVF: hereinafter, referred to as EVF) are known and respectively have advantages and disadvantages.

Specifically, the OVF has superiority to the EVF in that "there is no response delay in display", "a display image is clear", "the outside of a photographing range is visible (depending on the system), and thus a composition is easily determined", and the like. On the other hand, the EVF has priority in use over the OVF in that "display of a reproduced image or a menu (including superimposition display) is possible" and the like. Accordingly, in a digital camera (imaging apparatus) which includes both an OVF and an EVF, it is preferable to appropriately switch between the OVF and the EVF depending on the situation.

As an imaging apparatus in which a finder system is switched, for example, a technique described in JP2009-303258A is known. According to the technique described in JP2009-303258A, in a digital single lens reflex camera which can switch between an OVF (a movable mirror is inserted into an optical path and an optical image of a subject is visually recognized on a finder eyepiece part) and an EVF (the movable mirror is withdrawn from the optical path, and an electronic image of a subject acquired by an imaging element is visually recognized on a liquid crystal monitor) in which a live view mode (a mode in which a real-time image generated by an imaging element is displayed on a display unit) is possible, the OVF and the EVF are switched based on various user operations.

As an imaging apparatus in which a finder system is automatically switched, for example, a technique described JP2004-85935A is known. According to the technique described in JP2004-85935A, photographing condition determination means for determining conditions, such as remaining battery level, contrast in a scene to be photographed, and a subject distance, and the OVF and the EVF are automatically switched based on the determination result.

Further, in WO 2012/035822 A1 there is described a display control method for viewfinder device and device thereof. It is suggested to eliminate eye glare experienced by a photographer when he/she views an image in a viewfinder. Heretofore, there is provided a half mirror which is provided inside a viewfinder device and transmits an incident light image from the subject side to thereby project the image to the viewfinder viewing-window side on the photographer side; a display panel which is provided at a position facing the half mirror inside the viewfinder device, displays a specified brightness a captured image of a subject captured by an imaging element, and reflects the displayed captured image (EVF image) by means of the half mirror to thereby project the captured image to the viewfinder viewing-winder side on the photographer side, and a display controller which changes the brightness of the displayed image (EVF image), which is displayed on the display panel, in such a way that the brightness gradually increases to thereby set brightness to the specified brightness or further increase the brightness gradually from the specified brightness.

Further, in WO 2012/035877 A1 there is described an imaging device. The imaging device comprises an imaging optical system, an imaging element that forms an image of a photographic subject via the imaging optical system, a display unit that displays as live view image the image of the photographic subject captured by the imaging element, an optical view finder, a synthesis unit that synthesizes an optical image visually recognized by the optical view finder and the live view image displayed by the display unit, a focal displacement calculation unit that calculates the amount of focal displacement from the composition status of the photographic subject image, and a display control unit that shifts the live view image to be displayed in the display unit in relation to the optical image, according to the amount of focal displacement calculated by the focal displacement calculation unit.

### SUMMARY OF THE INVENTION

However, in the image display device described in JP2009-303258A and JP2004-85935A in which the OVF and the EVF are switched, when the OVF and the EVF are superimposed and a subject image is visually recognized on the finder eyepiece part, there is a problem in that deviation occurs between the subject image in the OVF and the subject image in the EVF. This deviation is caused by a display delay of the subject image displayed by the display means of the EVF, and image deviation occurs between the OVF and the EVF due to the time difference and becomes noticeable. In particular, when the imaging apparatus is panned, deviation increases and becomes noticeable.

The invention has been accomplished in consideration of this situation, and an object of the invention is to provide an image display apparatus capable of superimposing an optical viewfinder and an electronic viewfinder, having an advantage of reducing image deviation in the superimposition display of images of the OVF and the EVF.

In order to attain the above-described object, the invention provides an image display apparatus including the features of claim 1.

In the invention, the image deviation between the optical image and the live view image accompanied by display delay of a subject image displayed by the display means is corrected by the correction means. That is, since the display delay time of the subject image of the display means in the EVF can be known in advance, the image deviation is corrected with the display delay time.

With this configuration, it is possible to reduce image deviation in the superimposition display of images of the OVF and the EVF.
Columns [0013] to [0016] are cancelled.

It is preferable that the image display apparatus is an imaging apparatus in which the imaging means acquires the live view image before main photographing and acquires a recording image to be recorded in a recording medium in a state of the main photographing.

In the above-described invention, the live view image of the EVF includes an image obtained by adding information necessary for photographing to the live view image. As an example, the image based on the live view image is a face frame or an AF frame.

In the above-described invention, it is preferable that the correction means has panning detection means for detecting panning in a main photographing state, and the image deviation between the optical image and the live view image known in advance is corrected according to the angular velocity detected by the angular velocity sensor only in a time period during which panning is detected by the panning detection means.

The image deviation in the superimposition display of images of the OVF and the EVF is extremely large during panning. Accordingly, image deviation may be corrected only in a period during which panning is detected by the panning detection means.

According to the invention, it is possible to reduce image deviation in the superimposition display of images of the OVF and the EVF.

### BRIEF DESCRIPTION OF THE DRAWINGS

Fig. 1 is a block diagram showing an embodiment of an imaging apparatus according to the invention.
Fig. 2 is an explanatory view showing the embodiment of the invention.
Fig. 3 is a schematic view showing another embodiment of an imaging apparatus according to the invention.
Fig. 4 is a schematic view showing another embodiment of an imaging apparatus according to the invention.
Fig. 5 is a schematic view showing another embodiment of an imaging apparatus according to the invention.
Fig. 6 is a block diagram showing another embodiment of an imaging apparatus according to the invention.

### DESCRIPTION OF THE PREFERRED EMBODIMENTS

Hereinafter, a preferred embodiment of the invention will be described in detail referring to the accompanying drawings. Here, the parts represented by the same reference numerals are the same elements having the same functions. Hereinafter, although the invention will be described as to an imaging apparatus, as the imaging apparatus includes all the configurations of an image display apparatus according to the invention, the invention is established as to the image display apparatus as well as the imaging apparatus.

### <Overall configuration of imaging apparatus>

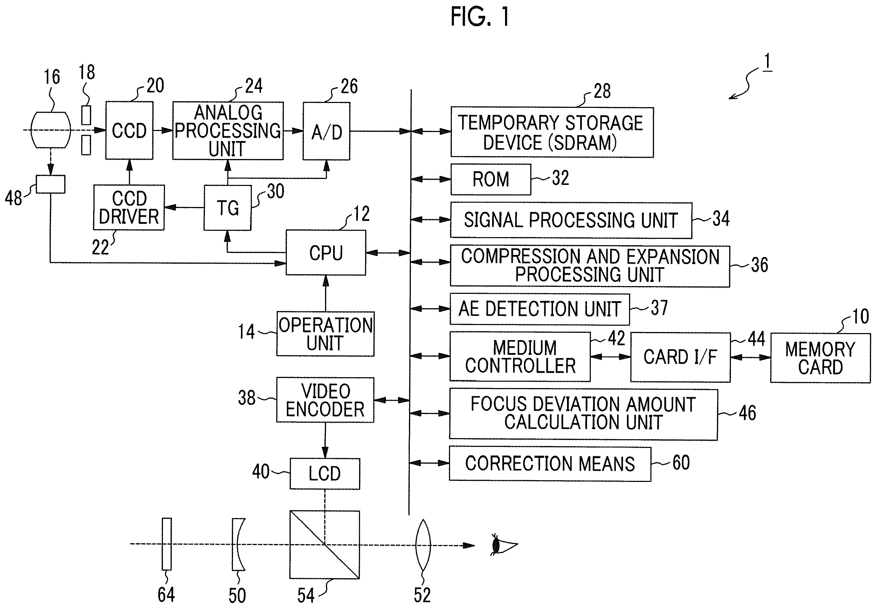

The overall configuration of an imaging apparatus according to the invention will be described referring to the drawings. Fig. 1 is a block diagram showing an embodiment of an imaging apparatus according to the invention.

As shown in Fig. 1, an imaging apparatus 1 is a digital camera which records a photographed still image or motion image in a memory card 10, and the operation of the entire camera is integrally controlled by a central processing unit (CPU) 12.

An operating unit 14 of the imaging apparatus 1 includes a power switch, a shutter button, a mode selection switch for switching an optical finder mode, an electronic viewfinder mode, an optical-electronic superimposition finder mode, a macro mode, a still image photographing mode, a motion image photographing mode, a reproduction mode, an automatic focusing (AF mode), a manual focusing (MF mode), and the like, a multifunction cross key for outputting various command signals, such as zooming or frame feeding, and the like. Various operation signals from the operating unit 14 are applied to the CPU 12.

When a photographing mode is set, image light representing a subject forms an image on the light receiving surface of an imaging element (CCD) 20 through a photographing optical system 16 including a focus lens movable by manual operation and an imaging lens, and a diaphragm 18. As an aspect of imaging means, the imaging optical system 16 including a focus lens and an imaging lens, the diaphragm, and the imaging element (CCD) are used. Next, a signal charge accumulated in the CCD 20 is sequentially read as a voltage signal according to the signal charge by a transfer pulse applied from a CCD driver 22. The CCD 20 has a so-called electronic shutter function of controlling an electric charge accumulation time (shutter speed) of each photosensor by the timing of a shutter gate pulse.

The voltage signal sequentially read from the CCD 20 is applied to an analog processing unit 24. The analog processing unit 24 includes signal processing circuits, such as a sample-and-hold circuit, a color separation circuit, and a gain adjustment circuit, performs correlation double sampling (CDS) processing and color separation processing into respective color signals of R, G, and B, and adjusts the signal level of each of the color signals (pre-white balance processing). A signal output from the analog processing unit 24 is converted to a digital signal (hereinafter, referred to as "CCD RAW data") by an A/D converter 26 and is then stored in a temporary storage device 28, such as a SDRAM

The temporary storage device 28 has storage capacity enough to temporarily store a plurality of pieces of CCD RAW data. The storage capacity of the temporary storage device 28 is not limited thereto. A timing generator (TG) 30 provides a timing signal to the CCD driver 22, the analog processing unit 24, and the A/D converter 26 in response to a command of the CPU 12, and the synchronization of the respective circuits is obtained by the timing signal.

A ROM 32 stores programs, adjustment values, and the like in advance, and the programs or the adjustment values are appropriately read.

A signal processing unit 34 has a WB gain unit which adjusts the gains of the R, G, and B signals to perform white balance (WB) correction, a gamma correction unit which performs gamma correction on the R, G, and B signals subjected to WB correction according to a ROM table with predetermined gamma characteristics for the corrected R, G, and B signals stored therein, a color interpolation processing unit which performs color interpolation processing corresponding to the color filter arrangement of the CCD 20, a YC processing unit which performs processing (YC conversion) for generating luminance data Y and color difference data Cr and Cb, a contour enhancement unit which attaches an aperture signal to the luminance data Y to perform contour enhancement, a noise reduction processing unit which performs noise reduction processing, such as smoothing processing and median filtering processing, and a saturation enhancement unit which increases and decreases the gains of color difference data Cr and Cb. The signal processing unit 34 sequentially performs signal processing on CCD RAW data stored in the temporary storage device 28 by the respective processing units.

Image data processed by the signal processing unit 34 is encoded in the video encoder 38, is output to a small liquid crystal display unit (LCD) 40 which is a display apparatus as an aspect of display means, and thus a subject image is displayed on the display screen of the LCD 40.

At a photographing preparation stage, images continuously photographed at a predetermined interval by the CCD 20 are subjected to processing for image display, are then output to the LCD 40, and are displayed as a live view image.

When the shutter button is fully pressed, CCD RAW data which is photographed through the photographing optical system 16 and the CCD 20 and is stored in the temporary storage device 28 is subjected to various kinds of signal processing by the signal processing unit 34 and is converted to YC data, and thereafter, YC data is output to a compression and expansion processing unit 36 and is subjected to predetermined compression processing, such as joint photographic experts group (JPEG). Compressed data subjected to compression processing is recorded in the memory card 10 through a medium controller 42 and a card interface 44.

For example, an automatic exposure (AE) detection unit 37 integrates the G signals of the entire image or integrates the G signals with different weights between a screen central portion and a peripheral portion, and outputs the integrated value to the CPU 12. The CPU 12 calculates the brightness (photographing Ev value) of the subject from the integrated value input from the AE detection unit 37, determines the F value of the diaphragm 18 and the electronic shutter (shutter speed) of the CCD 20 based on the photographing Ev value according to a predetermined program diagram, controls the diaphragm 18 based on the determined F value, and controls the charge accumulation time in the CCD 20 based on the determined shutter speed through the CCD driver 22.

A focus deviation amount calculation unit 46 detects a phase difference of a parallax image within a predetermined focus area among parallax images obtained from phase difference pixels of the CCD 20 including phase difference pixels, and calculates a focus deviation amount (defocus amount) based on information representing the phase difference. Instead of the CCD 20 including phase difference pixels, the focus deviation amount may be detected based on an output signal of a phase difference sensor or the like of the related art including a separator lens, a sensor which detects the forming positions of two images separated by the separator lens, and the like.

The focus deviation amount calculated by the focus deviation amount calculation unit 46 can be used to control the focus lens of the photographing optical system 16 such that the focus deviation amount becomes zero in the AF mode, and as described below, is used for display control of a live view image on the LCD 40 in the MF mode.

The position of the focus lens of the photographing optical system 16 is detected by a position sensor 48 and is transmitted to the CPU 12. The CPU 12 calculates the distance of the subject in focus on the current position of the focus lens based on the detection output of the position sensor 48. The position of the focus lens and the subject distance corresponding to the position are stored in the ROM 32 or the like in advance, and the CPU 12 reads the subject distance corresponding to the position of the focus lens from the ROM 32. The measurement of the subject distance may be performed by a base length triangular ranging sensor or the like. The thus-measured subject distance can be used to control the focus lens of the photographing optical system 16 in the AF mode, and as described below, is used for display control of a live view image on the LCD 40 in the MF mode. The position sensor 48 also detects the position (zoom position) of a variable magnification lens of the photographing optical system 16, and outputs information regarding the zoom position to the CPU 12.

The imaging apparatus 1 includes an optical finder (OVF) having an objective lens 50, an eyepiece lens 52, a liquid crystal shutter 64 as an aspect of a finder optical system. The liquid crystal shutter 64 is controlled by the CPU 12, and is placed in a transmission state when the optical finder is used. With this configuration, an optical image of the subject is transmitted through the liquid crystal shutter 64 and can be observed by the eyepiece lens 52 through the objective lens 50.

A beam splitter 54 is provided between the objective lens 50 and the eyepiece lens 52, and the beam splitter 54 is used as means for synthesizing the optical image of the subject incident on the objective lens 50 and the live view image displayed on the LCD 40. That is, the optical image incident on the objective lens 50 is transmitted through the beam splitter 54 and can be observed by the eyepiece lens 52, and the live view image displayed on the LCD 40 is reflected at right angles by the beam splitter 54 and can be observed by the eyepiece lens 52.

An electronic viewfinder (EVF) in which the live view image can be observed is constituted by the LCD 40, the beam splitter 54, and the eyepiece lens 52. Here, the liquid crystal shutter 82 is placed in a light shielding state, whereby only an image on the LCD 40 can be observed from the eyepiece lens 52. The liquid crystal shutter 82, which is an aspect of superimposition means, is placed in a light transmitting state, whereby the superimposition display of the live view image on the LCD 40 and the optical image transmitted through the objective lens 50 is possible. In this embodiment, the live view image of the EVF includes an image obtained by adding information necessary for photographing to the live view image. As an example of information necessary for photographing, a face frame or an AF frame is used.

That is, the imaging apparatus 1 includes a hybrid finder which can switch among the optical image display of the OVF, the image display of the EVF, and the superimposition display of the images of the OVF and the EVF.

Since the optical axis of the photographing optical system 16 and the optical axis of the OVF are different, an optical image and a live view image within a predetermined focus area have parallax according to the distance of the subject within the focus area. The CPU 12 moves the display position of the live view image displayed on the LCD 40 in order to correct parallax according to the calculated subject distance. With this configuration, the optical image and the live view image within the focus area can be displayed to match each other.

### <First Embodiment>

A first embodiment of the invention will be described referring to the drawings.

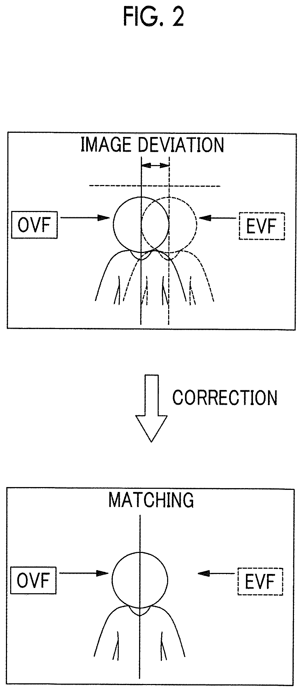

As shown in Fig. 1, the imaging apparatus 1 according to the invention includes correction means 60. Fig. 2 is a diagram showing an example of a finder image which is displayed in the hybrid finder having the above-described configuration, and in Fig. 2, the optical image of the OVF is indicated by a solid line, and the live view image of the EVF is indicated by a dotted line.

In the hybrid finder in which the optical image of the OVF and the live view image of the EVF by the photographing optical system are displayed in an overlapping manner, the live view image of the EVF is accompanied by display delay. Since the live view image of the EVF is displayed on the display screen of the LCD 40 from the CCD 20 through the analog processing unit 24, the A/D converter 26, the temporary storage device 28, the signal processing unit 34, and the video encoder 38, the display delay occurs. Compared to the subject image which is viewed by a photographer in the OVF, there is a time difference for the subject image displayed in the EVF through the photographing optical system, and image angle deviation by the time difference inevitably occurs.

In this embodiment, as shown in Fig. 2, image deviation between the optical image and the live view image (the live view image of the EVF) accompanied by display delay of the subject image displayed by the display means 40 is corrected by the correction means 60.

That is, since the display delay time of the subject image on the display means in the EVF can be known in advance, image deviation is corrected with the display delay time.

With this configuration, it is possible to reduce image deviation in the superimposition display of the images of the OVF and the EVF.

### <Second Embodiment>

A second embodiment of the invention which is regarded as the preferred embodiment for carrying out the invention will be described referring to the drawings.

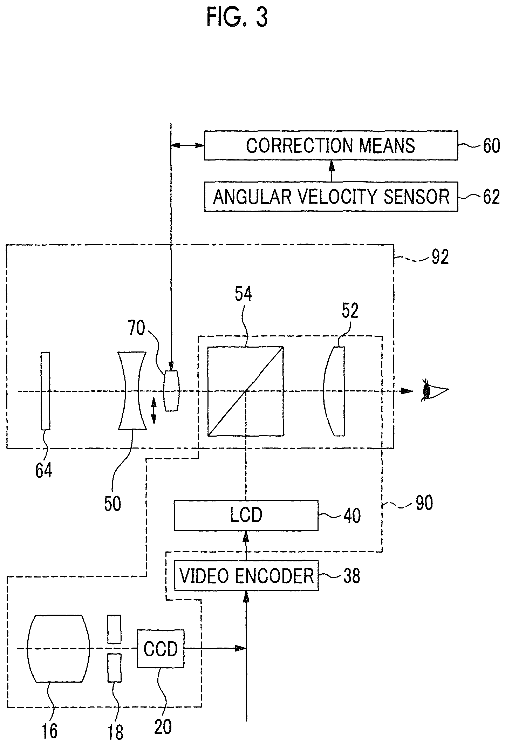

As shown in Figs. 3 to 5, the correction means 60 is provided with an angular velocity sensor 62. Figs. 3 to 5 show only the portions of the EVF optical system and the OVF optical system of Fig. 1, and the angular velocity sensor 62 is further provided in Fig. 1. The angular velocity of an imaging apparatus body is detected by the angular velocity sensor 62, and the image deviation between the optical image and the live view image known in advance can be corrected according to the detected angular velocity.

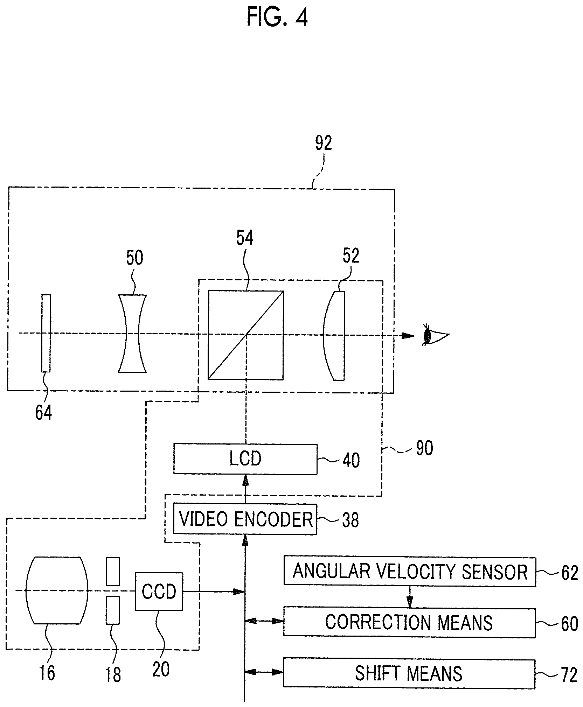

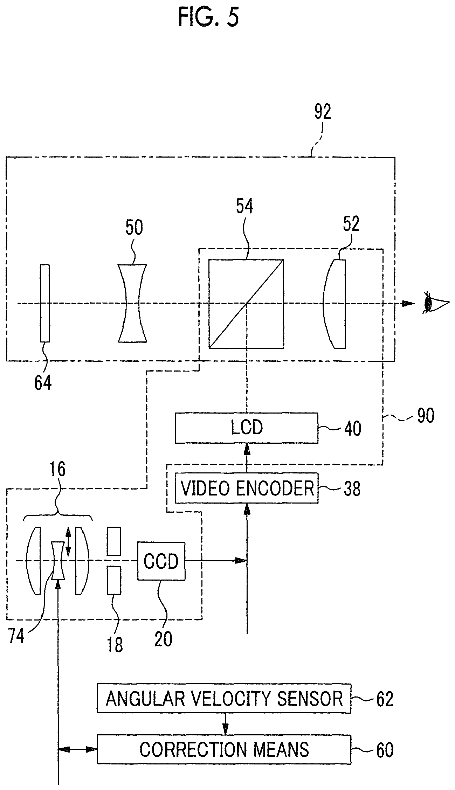

Specifically, as shown in Fig. 3, there are a mode in which the optical axis of the optical image to be confirmed in an OVF optical system 92 is shifted to match the optical axis of the live view image with display delay to be confirmed in an EVF optical system 90, thereby correcting the image deviation between the optical image and the live view image, and as shown in Fig. 4 or 5, a mode in which the optical axis of the live view image with display delay to be confirmed in the EVF optical system 90 is shifted to match the optical axis of the optical image to be confirmed in the OVF optical system 92, thereby correcting the image deviation between the optical image and the live view image.

In Fig. 3, the OVF optical system 92 is provided with a correction lens 70. The display delay time of the subject image on the display means in the EVF optical system 90 can be known in advance. A panning angle is known by the angular velocity sensor 62, and the correction lens 70 is shifted for the amount detected by the angular velocity sensor 62 in the OVF optical system 92 in the same manner as shake correction of the photographing optical system 16. That is, the optical image to be confirmed in the OVF optical system 92 is delayed conforming to the delay time of the live view image with display delay to be confirmed by the EVF optical system 90. With this configuration, it is possible to reduce the image deviation in the superimposition display of the images of the OVF and the EVF.

In Fig. 4, the EVF optical system 90 is provided with shift means 72. The display delay time of the subject image on the display means in the EVF optical system 90 can be known in advance. A panning angle is known by the angular velocity sensor 62, and the subject image displayed on the LCD 40 is shifted for the amount detected by the angular velocity sensor 62 in the EVF optical system 90 by the shift means 72. That is, the subject image is advanced for the delay time of the live view image of the EVF optical system 90 conforming to the optical image to be confirmed in the OVF optical system 92. With this configuration, it is possible to reduce the image deviation in the superimposition display of the images of the OVF and the EVF.

In Fig. 5, the photographing optical system 16 of the EVF optical system 90 is provided with a correction lens 74. The display delay time of the subject image on the display means in the EVF optical system 90 can be known in advance. A panning angle is known by the angular velocity sensor 62, and the correction lens 74 of the photographing optical system 16 of the EVF optical system 90 is shifted for the amount detected by the angular velocity sensor 62. That is, the subject image is advanced by the delay time of the live view image by the correction lens 74 of the photographing optical system 16 of the EVF optical system 90 conforming to the optical image to be confirmed in the OVF optical system 92. With this configuration, it is possible to reduce the image deviation in the superimposition display of the images of the OVF and the EVF. As the correction lens 74 of the photographing optical system 16, when a shake correction mechanism of the photographing optical system 16 is provided, the shake correction mechanism of the photographing optical system 16 may be used as it is. Though not shown, the CCD 20 may be shifted.

### <Third Embodiment>

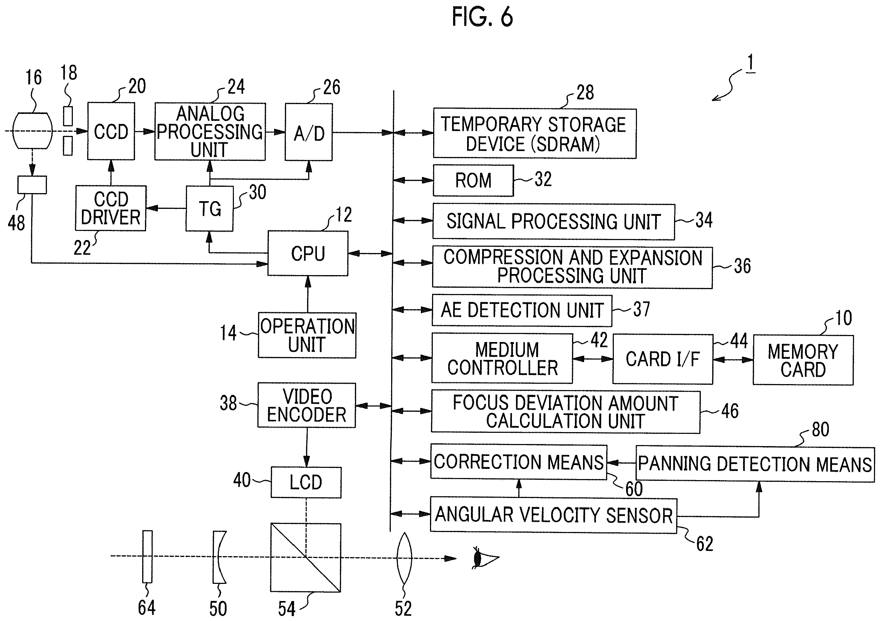

In Fig. 6, panning detection means 80 is provided in the above-described second embodiment. The panning detection means 80 detects panning in a photographing state. The image deviation between the optical image and the live view image known in advance is corrected according to the angular velocity detected by the angular velocity sensor 62 only in a period during which panning is detected by the panning detection means 80.

The image deviation in the superimposition display of the images of the OVF and the EVF is extremely large during panning. Accordingly, the image deviation is corrected only in a period during which panning is detected by the panning detection means.

### [Others]

The imaging apparatus 1 shown in Fig. 1 or Figs. 3 to 6, although the optical axis of the OVF and the optical axis of the photographing optical system are different, the invention may be applied to a single lens reflect finder or the like in which the optical axis of the OVF is the same optical axis as the photographing optical system. The invention may be applied to an image display apparatus other than the photographing apparatus.

In the invention, in order to integrate the correction amount for the display delay time of the EVF, it is necessary to store the value of the angular velocity sensor or the correction amount for the display delay time in the temporary storage device 28 or the like. The exposure time in a photographing system for producing an image (live view image) for EVF display depending on the subject may be extended. In this case, since the display delay time is changed, it is necessary to perform calculation while changing the display delay time with change in the exposure time in the photographing system.

## Claims

1. An image display apparatus, comprising
imaging means (16-38) including a photographing optical system (16) which is placed in the optical axis of an image sensor (20) for imaging a live view image of a subject as an image which is output and displayed on an image display unit (40) without being recorded in a recording medium;
an optical view finder (92) in which an optical image of the subject can be observed including a liquid crystal shutter (64), an objective lens (50), and an eyepiece lens (52) which are aligned along the optical path of the optical view finder (92), the liquid crystal shutter (64) being placed in a transmission state when the optical view finder (92) is used;
an electronic viewfinder (90) in which the live view image can be observed including the photographing optical system (16), the image sensor (20), the image display unit (40), a beam splitter (54), and the eyepiece lens (52), the live view image having a display delay time with respect to the optical image which is known in advance;
wherein
the beam splitter (54) is provided between the objective lens (50) and the eyepiece lens (52) such that when the optical image of the subject incident on the objective lens (50) is transmitted through the beam splitter (54) and can be observed by the eyepiece lens (52), the live view image displayed on the image display unit (40) is reflected at right angles by the beam splitter (54) and can also be observed by the eyepiece lens (52), wherein the observed optical image and the observed live view image are superimposed;
and **the image display apparatus being characterized by further comprising:**
an angular velocity sensor (62) for detecting an angular velocity of the body of the image display apparatus;
correction means (60) for correcting image deviation between the optical image and the live view image caused by the display delay time and a pan motion of the image display apparatus occurring during the display delay time by
shifting a correction lens (70) which is placed in the optical path of the optical view finder (92) according to the angular velocity of the body of the image display apparatus detected by the angular velocity sensor (62) during the display delay time, or by
shifting the display of the live view image on the display unit (40) using a shifting means (72) which is provided to the electronic viewfinder (90) according to the angular velocity of the body of the image display apparatus detected by the angular velocity sensor (62) during the display delay time, or by shifting a correction lens (74) which is placed in the optical path of the photographing optical system (16) of the electronic viewfinder (90) according to the angular velocity of the body of the image display apparatus detected by the angular velocity sensor (62) during the display delay time.

2. The image display apparatus according to claim 1,
wherein the image display apparatus is an imaging apparatus in which the imaging means acquires the live view image before main photographing and acquires a recording image to be recorded in a recording medium (10) in a state of the main photographing.

3. The image display apparatus according to claim 1 or 2,
wherein the live view image of the EVF includes an image obtained by adding information necessary for photographing to the live view image.

4. The image display apparatus according to claim 2 or 3,
wherein the correction means has panning detection means (80) for detecting panning in a photographing state, and the image deviation between the optical image and the live view image is corrected according to the angular velocity detected by the angular velocity sensor (62) only in a time period during which panning is detected by the panning detection means (80).

## Patentansprüche

1. Bildanzeigevorrichtung umfassend:
Bildgebungsmittel (16 - 38), die ein optisches Fotografiersystem (16) beinhalten, welches in der optischen Achse eines Bildsensors (20) zum Abbilden eines Live-View-Bilds eines Objekts als ein Bild, welches ausgegeben und auf einer Bildanzeigeeinheit (40) angezeigt wird, ohne in einem Aufzeichnungsmedium aufgezeichnet zu werden, platziert ist;
einen optischen Sucher (92), in welchem ein optisches Bild des Objekts betrachtet werden kann, der einen Flüssigkristallverschluss (64), eine Objektivlinse (50) und eine Okularlinse (52) beinhaltet, welche entlang der optischen Strecke des optischen Suchers (92) aneinandergereiht sind, wobei der Flüssigkristallverschluss (64) in einen Übertragungszustand platziert wird, wenn der optische Sucher (92) verwendet wird;
einen elektronischen Sucher (90), in welchem das Live-View-Bild betrachtet werden kann, der das optische Fotografiersystem (16), den Bildsensor (20), die Bildanzeigeeinheit (40), einen Strahlteiler (54) und die Okularlinse (52) beinhaltet, wobei das Live-View-Bild eine Anzeigeverzögerungszeit bezüglich des optischen Bilds aufweist, welche zuvor bekannt ist;
wobei
der Strahlenteiler (54) derart zwischen der Objektivlinse (50) und der Okularlinse (52) bereitgestellt ist, dass, wenn das optische Bild des Objekts, das auf die Objektivlinse (50) auftrifft, durch den Strahlenteiler (54) übertragen wird und durch die Okularlinse (52) betrachtet werden kann, das Live-View-Bild, das auf der Bildanzeigeeinheit (40) angezeigt wird, in rechten Winkeln von dem Strahlenteiler (54) reflektiert wird und auch durch die Okularlinse (52) betrachtet werden kann, wobei das betrachtete optische Bild und das betrachtete Live-View-Bild überlagert werden;
und die Bildanzeigevorrichtung **dadurch gekennzeichnet ist, dass** sie ferner folgendes umfasst:
einen Winkelgeschwindigkeitssensor (62) zum Erfassen einer Winkelgeschwindigkeit des Körpers der Bildanzeigevorrichtung;
ein Korrekturmittel (60) zum Korrigieren der Bildabweichung zwischen dem optischen Bild und dem Live-View-Bild, die durch die Anzeigeverzögerungszeit und eine Schwenkbewegung der Bildanzeigevorrichtung, die während der Anzeigeverzögerungszeit auftritt, hervorgerufen wird, durch
Verschieben einer Korrekturlinse (70), welche in der optischen Strecke des optischen Suchers (92) platziert ist, gemäß der Winkelgeschwindigkeit des Körpers der Bildanzeigevorrichtung, die von dem Winkelgeschwindigkeitssensor (62) während der Anzeigeverzögerungszeit erfasst wird, oder durch
Verschieben der Anzeige des Live-View-Bilds auf der Anzeigeeinheit (40) unter Verwendung eines Verschiebemittels (72), welches dem elektronischen Sucher (90) bereitgestellt wird, gemäß der Winkelgeschwindigkeit des Körpers der Bildanzeigevorrichtung, die von dem Winkelgeschwindigkeitssensor (62) während der Anzeigeverzögerungszeit erfasst wird, oder durch Verschieben einer Korrekturlinse (74), welche in der optischen Strecke des optischen Fotografiersystems (16) des elektronischen Suchers (90) platziert ist, gemäß der Winkelgeschwindigkeit des Körpers der Bildanzeigevorrichtung, die von dem Winkelgeschwindigkeitssensor (62) während der Anzeigeverzögerungszeit erfasst wird.

2. Bildanzeigevorrichtung nach Anspruch 1,
wobei die Bildanzeigevorrichtung eine Bildgebungsvorrichtung ist, bei welcher das Bildgebungsmittel das Live-View-Bild vor dem hauptsächlichen Fotografieren erhält und ein in einem Aufzeichnungsmedium (10) aufzuzeichnendes Aufzeichnungsbild in einem Zustand des hauptsächlichen Fotografierens erfasst.

3. Bildanzeigevorrichtung nach Anspruch 1 oder 2,
wobei das Live-View-Bild des elektronischen Suchers ein Bild beinhaltet, das durch Hinzufügen von Informationen, die zum Fotografieren notwendig sind,
zu dem Live-View-Bild erhalten wird.

4. Bildanzeigevorrichtung nach Anspruch 2 oder 3,
wobei das Korrekturmittel ein Schwenkerfassungsmittel (80) zum Erfassen eines Schwenkens in einem Fotografierzustand aufweist, und die Bildabweichung zwischen dem optischen Bild und dem Live-View-Bild gemäß der Winkelgeschwindigkeit, die von dem Winkelgeschwindigkeitssensor (62) erfasst wird, nur in einem Zeitraum korrigiert wird, während welchem das Schwenken von dem Schwenkerfassungsmittel (80) erfasst wird.

## Revendications

1. Appareil d'affichage d'image, comprenant
un moyen d'imagerie (16-38) incluant un système optique de photographie (16) qui est placé dans l'axe optique d'un capteur d'image (20) pour imager une image de vue en direct d'un sujet en tant qu'image qui est délivrée en sortie et affichée sur une unité d'affichage d'image (40) sans être enregistrée sur un support d'enregistrement;
un viseur optique (92) dans lequel une image optique du sujet peut être observée incluant un obturateur à cristaux liquides (64), une lentille d'objectif (50), et une lentille d'oculaire (52) qui sont alignés le long du chemin optique du viseur optique (92), l'obturateur à cristaux liquides (64) étant placé dans un état de transmission lorsque le viseur optique (92) est utilisé ;
un viseur électronique (90) dans lequel l'image de vue en direct peut être observée en incluant le système optique de photographie (16), le capteur d'image (20), l'unité d'affichage d'image (40), un séparateur de faisceau (54) et la lentille d'oculaire (52), l'image de vue en direct ayant un temps de retard d'affichage par rapport à l'image optique qui est connu à l'avance ; dans lequel
le séparateur de faisceau (54) est prévu entre la lentille d'objectif (50) et la lentille d'oculaire (52) de sorte que lorsque l'image optique du sujet incidente sur la lentille d'objectif (50) est transmise à travers le séparateur de faisceau (54) et peut être observée par la lentille d'oculaire (52), l'image de vue en direct affichée sur l'unité d'affichage d'image (40) est réfléchie à angle droit par le séparateur de faisceau (54) et peut également être observée par la lentille d'oculaire (52), dans lequel l'image optique observée et l'image de vue en direct observée sont superposées ;
et **l'appareil d'affichage d'image étant caractérisé en ce qu'il comprend en outre :**
un capteur de vitesse angulaire (62) pour détecter une vitesse angulaire du corps de l'appareil d'affichage d'image ;
un moyen de correction (60) pour corriger l'écart d'image entre l'image optique et l'image de vue en direct provoqué par le temps de retard d'affichage et un mouvement de panoramique de l'appareil d'affichage d'image se produisant pendant le temps de retard d'affichage en
décalant une lentille de correction (70) qui est placée dans le chemin optique du viseur optique (92) selon la vitesse angulaire du corps de l'appareil d'affichage d'image détectée par le capteur de vitesse angulaire (62) pendant le temps de retard d'affichage, ou en
décalant l'affichage de l'image de vue en direct sur l'unité d'affichage (40) en utilisant un moyen de décalage (72) qui est prévu sur le viseur électronique (90) selon la vitesse angulaire du corps de l'appareil d'affichage d'image détectée par le capteur de vitesse angulaire (62) pendant le temps de retard d'affichage, ou en
décalant une lentille de correction (74) qui est placée dans le chemin optique du système optique de photographie (16) du viseur électronique (90) selon la vitesse angulaire du corps de l'appareil d'affichage d'image détectée par le capteur de vitesse angulaire (62) pendant le temps de retard d'affichage.

2. Appareil d'affichage d'image selon la revendication 1,
dans lequel l'appareil d'affichage d'image est un appareil d'imagerie dans lequel le moyen d'imagerie acquiert l'image de vue en direct avant la photographie principale et acquiert une image d'enregistrement à enregistrer dans un support d'enregistrement (10) dans un état de la photographie principale.

3. Appareil d'affichage d'image selon la revendication 1 ou 2,
dans lequel l'image de vue en direct de l'EVF inclut une image obtenue en ajoutant des informations nécessaires pour la photographie à l'image de vue en direct.

4. Appareil d'affichage d'image selon la revendication 2 ou 3,
dans lequel le moyen de correction a un moyen de détection de panoramique (80) pour détecter un panoramique dans un état de photographie, et l'écart d'image entre l'image optique et l'image de vue en directe est corrigé selon la vitesse angulaire détectée par le capteur de vitesse angulaire (62) seulement dans une période de temps pendant laquelle un panoramique est détecté par le moyen de détection de panoramique (80).
